# EUROPEAN PATENT APPLICATION

(11) **EP 4 814 078 A1**
(43) Date of publication of application: **30.09.2026**
(21) Application number: 26167507.8
(22) Date of filing: 25.03.2026
(51) Int. Cl.: C09K 5/10, H01M 10/613, H01M 10/6567

(54) **ADDITIVES FOR THERMAL MANAGEMENT FLUID AND THERMAL MANAGEMENT FLUID COMPOSITIONS INCLUDING SAME**

(30) Priority: 25.03.2025 KR 20250038279; 19.03.2026 KR 20260049566
(71) Applicant: SK Innovation Co., Ltd., Seoul 03188 (KR); SK On Co., Ltd., Seoul 03161 (KR)
(72) Inventor: JUNG, Kang Min, 34124 Daejeon (KR); KIM, Hak Mook, 34124 Daejeon (KR); KIM, Ki Wan, 34124 Daejeon (KR); SHIN, Sang Hye, 34124 Daejeon (KR); LEE, Hong Won, 34124 Daejeon (KR); LEE, Dong Gun, 34124 Daejeon (KR); LEE, Jung A, 34124 Daejeon (KR)
(74) Representative: Prüfer & Partner mbB Patentanwälte · Rechtsanwälte

(57) **Abstract**

Proposed is a phosphorus-based additive composition for a thermal management fluid, the composition including a first phosphorus-based additive and a second phosphorus-based additive, in which the second phosphorus-based additive has a greater molecular weight than the first phosphorus-based additive. Further proposed is a thermal management fluid composition including the additive composition.

## Description

### BACKGROUND OF THE INVENTION

### Field of the Invention

The present disclosure relates to a phosphorus-based additive composition for a thermal management fluid and to a thermal management fluid composition including the same.

### Description of the Related Art

Thermal management fluids refer to fluids designed to efficiently transfer and regulate thermal energy, and are primarily employed in cooling and heating systems.

A coolant functions to absorb heat generated from a heat source, thereby reducing the temperature of the heat source. Desirable properties of a coolant include high thermal efficiency, low viscosity, low cost, non-toxicity, chemical stability, and non-corrosiveness toward system components.

As electronic products such as electric vehicles continue to achieve higher performance levels, an increasing amount of heat is generated during their operation. To ensure reliable operation and to prevent a reduction in product lifespan, effective thermal control of heat generated within such products has become an essential consideration.

Immersion cooling is one of the cooling methods used for thermal management of electronic devices and computer systems. In immersion cooling, electronic devices are cooled through direct contact with a fluid, which enables more effective heat removal compared to conventional air-cooling or water-cooling methods.

Meanwhile, higher capacity batteries in modern electronic products face increased thermal runaway risks, with the danger of causing battery fires. In an immersion cooling system, a thermal management fluid cools a battery by fully submerging the battery in the fluid, which isolates the battery from atmospheric oxygen and suppresses potential battery fires to a certain extent by creating an oxygen-deprived environment.

The foregoing is intended merely to aid in the understanding of the background of the present disclosure, and is not intended to mean that the present disclosure falls within the disclosure of the related art that is already known to those skilled in the art.

### Documents of Related Art

(Patent document 1) U.S. Patent Application Publication No. 20210171852

### SUMMARY OF THE INVENTION

According to the present disclosure, there is provided a phosphorus-based additive composition capable of improving fire propagation prevention performance of a thermal management fluid.

According to another aspect of the present disclosure, there is provided a thermal management fluid composition including the additive composition.

A phosphorus-based additive composition for a thermal management fluid according to one aspect of the present disclosure may include: a first phosphorus-based additive; and a second phosphorus-based additive. Here, the second phosphorus-based additive may have a greater molecular weight than the first phosphorus-based additive.

According to one embodiment, the first phosphorus-based additive includes a phosphate-based compound, preferably organic phosphate compound, and/or
the second phosphorus-based additive includes a phosphate-based compound, preferably organic phosphate compound.

According to one embodiment, the first phosphorus-based additive may have a molecular weight of 100 g/mol to less than 300 g/mol.

According to one embodiment, the first phosphorus-based additive may include a compound represented by Chemical Formula 1 below:

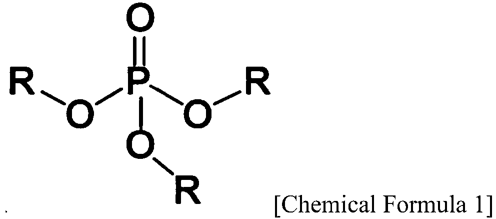

Here, each R may independently be hydrogen or a functional group having 1 to 14 carbon atoms, at least one R may not be hydrogen, and a total number of carbon atoms in the compound may be 1 to 14.

According to one embodiment, the functional group is a hydrocarbyl group, preferably an alkyl group, wherein the alkyl group optionally contains O, N, S, P, B, F, Cl, Br, I, or a combination thereof, preferably F.

According to one embodiment, the second phosphorus-based additive may have a molecular weight of 100 to 500 g/mol.

According to one embodiment, the second phosphorus-based additive may include a compound represented by Chemical Formula 2 below:

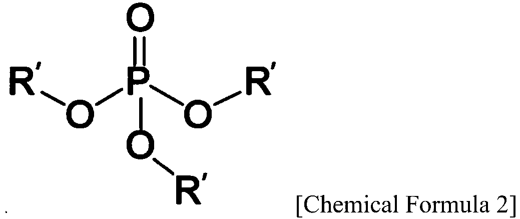

Here, each R' may independently be hydrogen or a functional group having 1 to 30 carbon atoms, at least one R' may not be hydrogen, and a total number of carbon atoms in the compound may be 1 to 30.

According to one embodiment, the functional group is a hydrocarbyl group, preferably an alkyl group, wherein the alkyl group optionally contains O, N, S, P, B, F, Cl, Br, I, or a combination thereof, preferably F.

According to one embodiment, a weight ratio of the first phosphorus-based additive to the second phosphorus-based additive may be from 1:3 to 3:1.

According to one embodiment, the phosphorus-based additive composition may satisfy a ΔFP (flash point difference) of at least 10°C. Here, ΔFP = (flash point of a fluid containing the additive composition) - (flash point of a fluid not containing the additive composition).

A thermal management fluid composition according to the present disclosure may include: a base oil; and a phosphorus-based additive composition as mentioned before.

According to one embodiment, the thermal management fluid composition may include: 90 to 98 wt% of the base oil; and equal to or less than 8 wt% of the phosphorus-based additive.

According to one embodiment, the base oil may include mineral oil, synthetic oil, vegetable oil, or a combination thereof.

According to one embodiment, the phosphorus-based additive may include: a first phosphorus-based additive having a molecular weight of 100 g/mol to less than 300 g/mol; and a second phosphorus-based additive having a molecular weight of 100 to 500 g/mol.

According to one embodiment, the thermal management fluid composition may further include: a second additive. Here, the second additive may include an antioxidant, an antifoaming agent, a corrosion inhibitor, a detergent, a dispersant, a friction modifier, an antiwear agent, an extreme-pressure additive, a viscosity index improver, a pour-point depressant, a viscosity modifier, or a combination thereof.

According to one embodiment, the thermal management fluid composition may have a flash point of at least 200°C.

According to one embodiment, application of the phosphorus-based additives can improve fire propagation prevention performance of a thermal management fluid.

According to one embodiment, the phosphorus-based additives can effectively maintain functionality even under high-temperature conditions such as thermal runaway.

According to one embodiment, application of the additives can enhance the flash point of a thermal management fluid.

According to one embodiment, a thermal management fluid to which the additives are applied can be used as an immersion-cooling fluid.

### DETAILED DESCRIPTION OF THE INVENTION

Hereinafter, the present disclosure will be described in detail. However, the following description is merely illustrative, and the present disclosure is not limited to the specific embodiments exemplarily described herein.

### Phosphorus-Based Additive Composition for Thermal Management Fluid

One aspect of the present disclosure provides a phosphorus-based additive composition for a thermal management fluid. The phosphorus-based additive composition includes a first phosphorus-based additive and a second phosphorus-based additive. Here, the second phosphorus-based additive has a greater molecular weight than the first phosphorus-based additive. As used herein, the term "phosphorus-based additive" refers to an additive including a compound containing the element phosphorus (P).

The phosphorus-based additive composition may be added to a thermal management fluid. The additive composition may be incorporated to suppress the propagation of fire from an electronic product (e.g., a battery) adjacent to the thermal management fluid to other products, components, or surrounding areas in the event of a fire. More specifically, the additive composition may enhance the chemical fire suppression capability of the thermal management fluid. For example, during thermal runaway of a battery, the ambient temperature may rapidly increase to a high temperature of 1,000°C or higher. Under such extreme thermal conditions, the phosphorus-based additive composition of the present disclosure may prevent the propagation of fire to adjacent battery cells, thereby minimizing damage caused by battery thermal runaway.

Combustion of a material proceeds through chain reactions in which free radicals are continuously generated and consumed. During combustion, the phosphorus-based additive decomposes to generate radicals that function to remove surrounding free radicals. In other words, the phosphorus-based additive may contribute to preventing fire propagation by interrupting the chain reactions through scavenging highly reactive free radicals generated during thermal decomposition at high temperatures.

The type of phosphorus-based additive is not particularly limited, provided that it is capable of performing the function described above. From the perspective of immersion cooling, the phosphorus-based additive may be any additive that can perform the above-described role without impairing the immersion cooling performance of a thermal management fluid applied to electronic products.

As described above, the additive composition includes the first phosphorus-based additive and the second phosphorus-based additive, and the second phosphorus-based additive has a greater molecular weight than the first phosphorus-based additive. Specifically, the molecular weight of the first phosphorus-based additive may be less than 300 g/mol. According to one embodiment, the molecular weight of the first phosphorus-based additive may be 100 g/mol to less than 300 g/mol, specifically 100 to 250 g/mol, more specifically 100 to 200 g/mol, and still more specifically 150 to 200 g/mol. The first phosphorus-based additive (or the second phosphorus-based additive) may be a small molecule (or a monomeric compound), an oligomer, or a polymer. Specifically, it may be a small molecule. When the additive is a small molecule, the molecular weight refers to a value calculated from the chemical formula. In the case of an oligomer or a polymer, the molecular weight refers to a weight average molecular weight. Additionally, for the oligomer or the polymer, the weight average molecular weight refers to a polystyrene-equivalent molecular weight measured by gel permeation chromatography (GPC).

According to another embodiment, the decomposition temperature of the first phosphorus-based additive may be 150°C to 250°C, specifically 170°C to 230°C, more specifically 180°C to 220°C, and still more specifically about 200°C. When the ambient temperature reaches the decomposition temperature, the first phosphorus-based additive may undergo thermal decomposition and perform a flame-retardant function. Whereas, when the molecular weight of the first phosphorus-based additive exceeds the above-described range, the flame-retardant performance at about 200°C may degrade.

The first phosphorus-based additive may include a phosphate-based compound. As used herein, the term "phosphate-based compound" refers to a compound containing phosphate. Specifically, the phosphate-based compound may be an organic phosphate compound. According to one embodiment, the first phosphorus-based additive may be a phosphate-based compound. According to another embodiment, the first phosphorus-based additive may include at least one phosphate-based compound.

In an embodiment in which the first phosphorus-based additive includes a phosphate-based compound, the first phosphorus-based additive may include a compound represented by Chemical Formula 1 below:

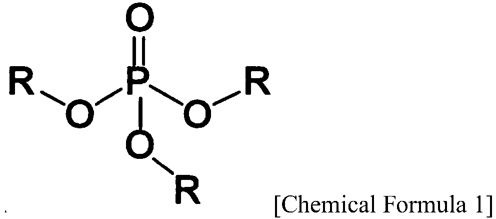

Here, three functional groups R are independent of one another. Each R may independently be hydrogen or a functional group having 1 to 14 carbon atoms. Specifically, the R may be hydrogen or a functional group having 1 to 12 carbon atoms; more specifically, hydrogen or a functional group having 1 to 9 carbon atoms; and still more specifically, hydrogen or a functional group having 1 to 6 carbon atoms.

Additionally, at least one of the three R groups may not be hydrogen. In other words, at least one R may be a functional group having 1 to 14 carbon atoms.

Meanwhile, the functional group may be a hydrocarbyl group. From the viewpoint of chemical stability, the functional group may be an alkyl group. The functional group may also be linear, branched, or cyclic. According to another embodiment, the R may further include a heteroatom. For example, the R may further include O, N, S, P, B, F, Cl, Br, I, or a combination thereof. More specifically, the R may further include a halogen atom. In this case, the R may be a halogen-substituted alkyl group. More specifically, the R may further include fluorine (F).

Additionally, according to one embodiment, the total number of carbon atoms in the compound may be 1 to 14. This means that one molecule having the structure of Chemical Formula 1 contains 1 to 14 carbon atoms. Specifically, the total number of carbon atoms may be 1 to 12, more specifically 1 to 9, and still more specifically 1 to 6.

The second phosphorus-based additive of the present disclosure has a greater molecular weight than the first phosphorus-based additive. Accordingly, the molecular weight of the second phosphorus-based additive may be equal to or greater than 100 g/mol. According to one embodiment, the molecular weight of the second phosphorus-based additive may be about 100300 to about 500 g/mol, such as about 100 to about 400 g/mol, about 110 to about 500 g/mol, about 150 to about 400 g/mol, about 150 to about 300 g/mol, about 200 to about 500 g/mol, about 200 to about 400 g/mol, about 200 to about 300 g/mol, about 300 to about 500 g/mol, about 300 to about 400 g/mol, about 400 to about 500 g/mol, or about 400 to about 450 g/mol. If the molecular weight of the second phosphorus-based additive exceeds the aforementioned range, the decomposition temperature increases, which may cause a problem of reduced flame retardancy at approximately 400°C. According to another embodiment, the decomposition temperature of the second phosphorus-based additive may be 120°C to 450°C, specifically 150°C to 450°C, more specifically 180°C to 430°C, such as 180°C to 400°C, 180°C to 250°C, 200°C to 400°C, 370°C to 430°C, or 380°C to 420°C. When the ambient temperature reaches the decomposition temperature, the second phosphorus-based additive may undergo thermal decomposition and perform a flame-retardant function. When the ambient temperature reaches the decomposition temperature, the second phosphorus-based additive may undergo thermal decomposition and perform a flame-retardant function.

When the molecular weight range of the first phosphorus-based additive overlaps with the molecular weight range of the second phosphorus-based additive, the phosphorus-based additive having a larger molecular weight may be classified as the second phosphorus-based additive. According to an embodiment, the difference in molecular weight between the first phosphorus-based additive and the second phosphorus-based additive may be at least 1 g/mol, at least 10 g/mol, at least 15 g/mol, or at least 20 g/mol.

The second phosphorus-based additive may include a phosphate-based compound. Specifically, the phosphate-based compound may be an organic phosphate compound. According to one embodiment, the second phosphorus-based additive may be a phosphate-based compound. According to another embodiment, the second phosphorus-based additive may include at least one phosphate-based compound.

In an embodiment in which the second phosphorus-based additive includes a phosphate-based compound, the second phosphorus-based additive may include a compound represented by Chemical Formula 2 below:

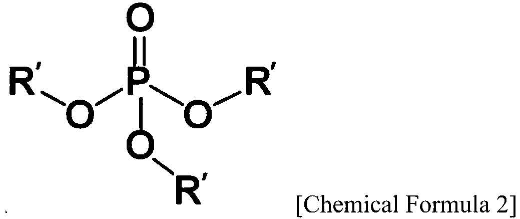

Here, three functional groups R' are independent of one another. Each R' may independently be hydrogen or a functional group having 1 to 30 carbon atoms. Specifically, the R' may be hydrogen or a functional group having 1 to 26 carbon atoms.

Additionally, at least one of the three R' groups may not be hydrogen. In other words, at least one R' may be a functional group having 1 to 30 carbon atoms.

Meanwhile, the functional group may be a hydrocarbyl group. From the viewpoint of chemical stability, the functional group may be an alkyl group. The functional group may also be linear, branched, or cyclic. According to another embodiment, the R' may further include a heteroatom. For example, the R' may further include O, N, S, P, B, F, Cl, Br, I, or a combination thereof. More specifically, the R' may further include a halogen atom. In this case, the R' may be a halogen-substituted alkyl group. More specifically, the R' may further include fluorine (F).

Additionally, according to one embodiment, the total number of carbon atoms in the compound may be 4 to 30. Specifically, the total number of carbon atoms may be 7 to 30, more specifically 10 to 30, and still more specifically 12 to 30.

According to some embodiments, the selection of the second phosphorus-based additive may be influenced by the selection of the first phosphorus-based additive, and vice versa. For example:
i) When R in the first phosphorus-based additive includes an alkyl group, R' in the second phosphorus-based additive may also include an alkyl group.
ii) When all R groups in the first phosphorus-based additive are alkyl groups, all R' groups in the second phosphorus-based additive may also be alkyl groups.
iii) When all R groups in the first phosphorus-based additive are unsubstituted alkyl groups, all R' groups in the second phosphorus-based additive may also be unsubstituted alkyl groups.
iv) When R in the first phosphorus-based additive includes a linear alkyl group, R' in the second phosphorus-based additive may include a branched alkyl group.
v) When all R groups in the first phosphorus-based additive are linear alkyl groups, all R' groups in the second phosphorus-based additive may be branched alkyl groups.
vi) When all R groups in the first phosphorus-based additive are identical, all R' groups in the second phosphorus-based additive may also be identical.
vii) When the total number of carbon atoms in the phosphate-based compound of the first phosphorus-based additive is 1 to 6, the total number of carbon atoms in the phosphate-based compound of the second phosphorus-based additive may be 7 to 30.

According to one embodiment, the first phosphorus-based additive and the second phosphorus-based additive may satisfy at least one of the above-described conditions i) to vii). More specifically, the phosphorus-based additives may satisfy at least two, and more specifically at least three, of the above-described conditions i) to vii).

In the phosphorus-based additive composition, the first phosphorus-based additive and the second phosphorus-based additive may be uniformly mixed in an appropriate ratio. According to one embodiment, the weight ratio of the first phosphorus-based additive to the second phosphorus-based additive in the composition may be 1:3 to 3:1. When the weight ratio exceeds the above-described range, the flame-retardant effect at a specific ambient temperature may be reduced.

Use of the phosphorus-based additive composition in a thermal management fluid may also increase the flash point of the fluid. While not wishing to be bound by any particular theory, it is believed that during use of the thermal management fluid, radicals generated from the decompostion of volatilized gaseous species may induce the formation of highly reactive radicals from the base oil. However, radicals generated through thermal decomposition of the additive are believed to scavenge such highly reactive radicals, thereby improving the flash point of the fluid.

According to one embodiment, the additive composition may satisfy a ΔFP (flash point difference) of at least 10°C. In other words, a thermal management fluid containing the additive composition may satisfy the above-described ΔFP. Here, the ΔFP is defined as: ΔFP = (flash point of a fluid containing the additive composition) - (flash point of a fluid not containing the additive composition). In the present disclosure, the flash point of the fluid is measured in accordance with ASTM D93. The ΔFP of the thermal management fluid is a value calculated when the content of the additive composition is 2 to 10 wt% based on the total weight of a thermal management fluid composition. Specifically, the ΔFP may be 10 to 100°C, more specifically 20 to 90°C, still more specifically 30 to 80°C, and even more specifically 40 to 80°C.

The additive composition described above may be incorporated into a conventional thermal management fluid and is expected to, when thermal runaway occurs in an electronic product including a battery module, more effectively suppress fire propagation to adjacent battery cells within the module, thereby providing safety improvements such as prevention of large-scale fires. Additionally, since the additive composition improves the flash point of the thermal management fluid, base oils that were previously unsuitable for use in thermal management fluids due to low flash points may become usable. Accordingly, the additive composition is expected to provide the effect of broadening the selection range of base oils for thermal management fluids.

### Thermal Management Fluid Composition

Another aspect of the present disclosure provides a thermal management fluid composition including the above-described additives. Hereinafter, unless otherwise specified, the descriptions provided above with respect to the additives may be equally applicable, and redundant descriptions may be omitted.

The thermal management fluid composition includes a base oil and a phosphorus-based additive. The thermal management fluid composition possesses physical properties such as excellent electrical insulation performance and cooling performance, enabling direct contact with an electronic product to cool the electronic product. Accordingly, according to one embodiment, the fluid composition may be used for immersion cooling.

As the base oil, any conventional or future base oil suitable for use as a thermal management fluid may be employed. For example, the base oil may include mineral oil, synthetic oil, vegetable oil, or a combination thereof. The mineral oil refers to an oil derived (refined) from crude oil without undergoing a separate synthetic process. In the present disclosure, the mineral oil may include base oils corresponding to American Petroleum Institute (API) Groups I to III. The synthetic oil may include polyalphaolefin (PAO), gas-to-liquid (GTL) base oil, coal-to-liquid (CTL) base oil, or ester-based oil.

According to one embodiment, the fluid composition may include 90 to 98 wt% of the base oil and equal to or less than 8 wt% of the phosphorus-based additive, based on the total weight of the composition. Here, the content of the base oil in the fluid composition may be 90 to 98 wt%. Specifically, the content may be 92 to 98 wt%. When the content of the base oil exceeds 98 wt%, the above-described additives may fail to perform their intended functions, thereby providing little benefit over the base oil alone. Whereas, when the content of the base oil is less than 90 wt%, the amount of additives, which are generally more expensive than the base oil, may increase, thereby leading to an increase in the final product cost.

The content of the phosphorus-based additive in the fluid composition may be equal to or less than 8 wt%. Specifically, the content may be greater than 0 to equal to or less than 8 wt%, more specifically 2 to 8 wt%, and still more specifically 2 to 6 wt%. From the viewpoint of improving fire propagation suppression performance, the content may be equal to or greater than 2 wt%. Whereas, when the content exceeds the above numerical range, the phosphorus-based additive may not be fully dissolved in the fluid composition and may remain in the form of droplets within the base oil. Such non-uniform dissolution of the phosphorus-based additive may cause a degradation in fire propagation prevention performance.

The phosphorus-based additive may include a first phosphorus-based additive and a second phosphorus-based additive. Specifically, the first phosphorus-based additive may have a molecular weight of 100 g/mol to less than 300 g/mol. Additionally, the second phosphorus-based additive may have a molecular weight of 100 to 500 g/mol. In some embodiments, the content of the first phosphorus-based additive in the fluid composition may be greater than 0 to equal to or less than 4 wt%, specifically 1 to 4 wt%, and more specifically 1 to 3 wt%. Additionally, in some embodiments, the content of the second phosphorus-based additive in the fluid composition may be greater than 0 to equal to or less than 4 wt%, specifically 1 to 4 wt%, and more specifically 1 to 3 wt%.

The fluid composition may further include an additive other than the phosphorus-based additive described above. In the present disclosure, such an additional additive is referred to as a second additive in order to distinguish it from the phosphorus-based additive (first additive). The second additive is not particularly limited, provided that it is usable for improving the physical properties of the thermal management fluid composition. For example, the second additive may include an antioxidant, an antifoaming agent, a corrosion inhibitor, a detergent, a dispersant, a friction modifier, an antiwear agent, an extreme-pressure additive, a viscosity index improver, a pour-point depressant, a viscosity modifier, or any combination thereof.

The content of the second additive in the fluid composition may be equal to or less than 2 wt%. Specifically, the content may be 0 to 2 wt%, more specifically 0.1 to 2 wt%, and still more specifically 0.5 to 2 wt%.

As described above, the flash point of the fluid composition may be improved by the addition of the aforementioned additives. According to one embodiment, the flash point of the fluid composition may be at least 200°C. Specifically, the flash point may be 210°C to 300°C, more specifically 220°C to 290°C, still more specifically 230°C to 280°C, and even more specifically 240°C to 280°C. If necessary, the fluid composition may employ a base oil having a relatively low viscosity. In this case, the flash point of the fluid composition may differ from the above-described range. Specifically, the flash point of the fluid composition may be less than 200°C.

Use of the thermal management fluid composition of the present disclosure, which includes the additives described above, may reduce the likelihood of fire propagation during battery thermal runaway in an electronic product not only through physical fire suppression such as oxygen deprivation (smothering), but also through chemical fire suppression. Accordingly, when used as an immersion-cooling thermal management fluid, the fluid composition is expected to mitigate damage in the event of a battery fire.

Additional description of the embodiments of the present disclosure will be provided below with reference to the specific experimental examples. However, the following examples and comparative examples included in the experimental examples are only given for illustrating the embodiments and do not limit the appended claims. It will be apparent to those skilled in the art that various modifications and alterations of the examples may be made without departing from the scope and spirit of the present disclosure. These modifications and alterations will fall within the appended claims.

### Example

### 1. Preparation of Thermal Management Fluid Composition

A thermal management fluid composition was prepared by combining a base oil and phosphorus-based additives. As the base oil, YUBASE 3 was used, which has a flash point of about 184°C measured according to ASTM D93, a kinematic viscosity at 40°C of 12.4 cSt, and a kinematic viscosity at 100°C of 3.1 cSt. As a first phosphorus-based additive, triethyl phosphate, having a molecular weight of 182 g/mol and a flash point of about 124°C measured according to ASTM D93, was used. As a second phosphorus-based additive, tris(2-ethylhexyl) phosphate, having a molecular weight of 434 g/mol and a flash point of about 178°C measured according to ASTM D93, was used.

The content of each compositional component in Examples 1 to 4 and Comparative Examples 1 to 3 is presented in Table 1 below.

**TABLE 1**

| | Base oil (wt%) | Triethyl phosphate (wt%) | Tris(2-ethylhexyl) phosphate (wt%) |
|---|---|---|---|
| Comparative Example 1 | 100 | - | - |
| Comparative Example 2 | 97.5 | 2.5 | - |
| Comparative Example 3 | 95.0 | - | 5.0 |
| Example 1 | 95.0 | 2.5 | 2.5 |
| Example 2 | 96.0 | 2.0 | 2.0 |
| Example 3 | 93.0 | 2.0 | 5.0 |
| Example 4 | 90.0 | 2.5 | 7.5 |

### 2. Performance Evaluation of Prepared Thermal Management Fluid Compositions

### (1) Flash Point Measurement

The flash point of each of the fluid compositions of the above Comparative Examples and Examples was measured and the results are presented in Table 2 below. The flash point measurement was performed in accordance with ASTM D93.

### (2) Battery Cell Fire Propagation Test

Four pouch cells were arranged in a test module by symmetrically stacking two cells on each side of a thermal insulation layer, after which the assembled module was fully immersed in each of the fluid compositions of Comparative Examples 1 and 2 and Examples 2 and 4. Subsequently, thermal runaway and explosion were intentionally induced in the outermost cell on one side, and the occurrence of fire propagation to the cell adjacent to the insulation layer on the opposite side, as well as the temperature behavior of the corresponding battery cell, were observed. The results are presented in Table 2 below. Cases in which fire propagation to the adjacent cell beyond the insulation layer did not occur were marked as "Success", whereas cases in which fire propagation occurred were marked as "Failure".

**TABLE 2**

| | Comparative Example 1 | Comparative Example 2 | Comparative Example 3 | Example 1 | Example 2 | Example 3 | Example 4 |
|---|---|---|---|---|---|---|---|
| Flash point (°C) | 184 | 214 | 184 | 230 | 230 | 258 | 258 |
| Fire propagation | Failure | Success | - | - | Success | - | Success |
| Adjacent cell temperature (°C) | 158 | 137 | - | - | 101 | - | 98 |

Referring to Table 2, it can be seen that the flash points of the Examples including the phosphorus-based additives of the present disclosure were significantly increased compared to those of the Comparative Examples. It can also be found that use of the phosphorus-based additives of the present disclosure in a thermal management fluid not only could prevent fire propagation beyond the insulation layer, but also effectively suppress heating of adjacent cells caused by the fire, which can be seen from the adjacent cell temperatures.

The phosphorus-based additives of the present disclosure may be readily applicable to conventional thermal management fluids and is expected to contribute to preventing battery thermal runaway and fire propagation, particularly when utilized in immersion cooling of electronic products such as electric vehicles including high-capacity batteries.

The foregoing description is merely an example of applying the principles of the present disclosure, and other configurations may be further included without departing from the scope of the present disclosure.

## Claims

1. A phosphorus-based additive composition for a thermal management fluid, the phosphorus-based additive composition comprising:
a first phosphorus-based additive; and
a second phosphorus-based additive, wherein the second phosphorus-based additive has a greater molecular weight than the first phosphorus-based additive.

2. The phosphorus-based additive composition according to claim 1, wherein the first phosphorus-based additive includes a phosphate-based compound, preferably organic phosphate compound, and/or
the second phosphorus-based additive includes a phosphate-based compound, preferably organic phosphate compound.

3. The phosphorus-based additive composition of claim 1 or 2, wherein the first phosphorus-based additive has a molecular weight of 100 g/mol to less than 300 g/mol.

4. The phosphorus-based additive composition according to any one of the preceding claims,
wherein the first phosphorus-based additive comprises a compound represented by Chemical Formula 1 below: 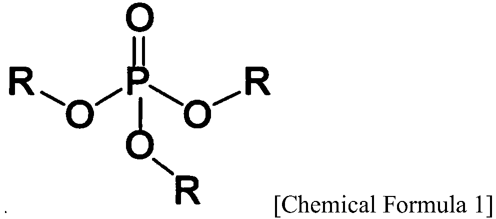
wherein each R is independently hydrogen or a functional group having 1 to 14 carbon atoms,
at least one R is not hydrogen, and
a total number of carbon atoms in the compound is 1 to 14.

5. The phosphorus-based additive composition according to claim 4, wherein the functional group is a hydrocarbyl group, preferably an alkyl group, wherein the alkyl group optionally contains O, N, S, P, B, F, Cl, Br, I, or a combination thereof, preferably F.

6. The phosphorus-based additive composition according to any one of the preceding claims, wherein the second phosphorus-based additive has a molecular weight of 100 to 500 g/mol.

7. The phosphorus-based additive composition according to any one of the preceding claims, wherein the second phosphorus-based additive comprises a compound represented by Chemical Formula 2 below: 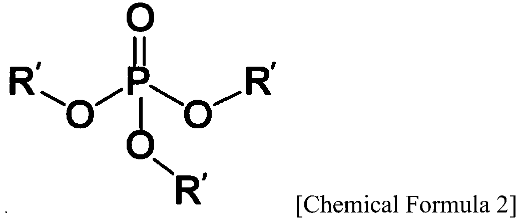
wherein each R' is independently hydrogen or a functional group having 1 to 30 carbon atoms,
at least one R' is not hydrogen, and
a total number of carbon atoms in the compound is 1 to 30.

8. The phosphorus-based additive composition according to claim 7, wherein the functional group is a hydrocarbyl group, preferably an alkyl group, wherein the alkyl group optionally contains O, N, S, P, B, F, Cl, Br, I, or a combination thereof, preferably F.

9. The phosphorus-based additive composition according to any one of the preceding claims, wherein a weight ratio of the first phosphorus-based additive to the second phosphorus-based additive is from 1:3 to 3:1.

10. The phosphorus-based additive composition according to any one of the preceding claims, wherein the phosphorus-based additive composition satisfies a ΔFP (flash point difference) of at least 10°C,
wherein ΔFP = (flash point of a fluid containing the additive composition) - (flash point of a fluid not containing the additive composition).

11. A thermal management fluid composition, comprising:
a base oil; and
a phosphorus-based additive composition according to one of claims 1 to 10.

12. The thermal management fluid composition of claim 11, comprising:
90 to 98 wt% of the base oil; and
equal to or less than 8 wt% of the phosphorus-based additive composition.

13. The thermal management fluid composition of claim 11 or claim 12, wherein the base oil comprises mineral oil, synthetic oil, vegetable oil, or a combination thereof.

14. The thermal management fluid composition according to any one of claims 11-13, further comprising:
a second additive,
wherein the second additive comprises an antioxidant, an antifoaming agent, a corrosion inhibitor, a detergent, a dispersant, a friction modifier, an antiwear agent, an extreme-pressure additive, a viscosity index improver, a pour-point depressant, a viscosity modifier, or a combination thereof.

15. The thermal management fluid composition according to any one of claims 11-14, wherein the thermal management fluid composition has a flash point of at least 200°C.
